# EUROPEAN PATENT SPECIFICATION

(11) **EP 2 339 195 B1**
(45) Date of publication and mention of the grant of the patent: **28.11.2012**
(21) Application number: 09179820.7
(22) Date of filing: 18.12.2009
(51) Int. Cl.: F16D 1/09

(54) **Coupling of a constant velocity joint and a hub bearing unit of a motor vehicle wheel**
Verbindung eines Gleichlaufgelenks und einer Nabenlagereinheit eines Kraftfahrzeugrades
Couplage d'un joint à vitesse constante et d'une unité de moyeu d'une roue d'un véhicule à moteur

(43) Date of publication of application: 29.06.2011
(73) Proprietor: Aktiebolaget SKF, 415 50 Göteborg (SE)
(72) Inventor: Ciulla, Luca, I-10137 TORINO (IT)
(74) Representative: Fioravanti, Corrado

(56) References cited:
- EP-A1- 1 508 710
- EP-A2- 1 126 187
- DE-A1- 19 518 697
- DE-A1- 19 546 021
- FR-A1- 2 367 942
- GB-A- 2 041 162

## Description

The present invention refers to the coupling between a constant velocity joint and a hub bearing unit of a motor vehicle wheel.

US 2002/0070506 A1 and US 6 354 952 B1 disclose arrangements in which the hub of the wheel receives the driving torque from the bell of the constant velocity joint through a straight splined coupling. To this end, fixed on the hub is a ring with an axial outer toothing that is telescopically inserted in a tubular projection with an inner axial toothing of the outer part or "bell" of the constant velocity joint. The toothed ring and the tubular projection are both provided with a respective circular groove in which an elastic, open ring (or circlip or Seeger ring) is fitted in order to axially lock the hub to the joint.

The above conventional arrangement, although being highly serviceable, has a limit due to scarce sealing. The aforesaid elastic ring has two gripping arms at its ends that project through a slot formed at the axially outer end (or outboard end) of the joint bell. Shown in fig. 5 of US 2002/0070506 is a rubber sleeve covering the slot in order to seal it. A scarcely efficient sealing allows water to penetrate, especially through the slot formed at the end of the joint bell, into the splined interface zone. Rust formed at the interface of the splined coupling renders the disassembling operation of the hub-bearing unit from the constant velocity joint particularly difficult, besides shortening the life of this members.

Other known arrangements for coupling a hub bearing unit and a constant velocity joint are disclosed in EP 1 508 710 A1, DE 195 18 697 A1, GB 2 041 162 A, FR 2 367 942 A1.

It is a primary object of the invention to optimize the hermetic sealing action at the interface zone between the constant velocity joint and the hub bearing unit, closing the passages through which water may leak into the inner parts of the constant velocity joint and preventing water from accessing the splined coupling between the joint and the hub-bearing unit. Another object of the invention is to facilitate the steps of assembling and disassembling the hub-bearing unit to and from the constant velocity joint.

These objects are achieved, according to an aspect of the invention, by a coupling arrangement as defined in claim 1. Preferred embodiments of the invention are set forth in the dependent claims. Briefly summarized, the invention provides a rigid circular member received in the cavity of the bell member of the constant velocity joint. That circular member provides a rigid, conical peripheral edge which tapers in an axially outward direction and axially abuts against a correspondingly shaped conical surface formed within the cavity of the bell member. The hub and the constant velocity joint are releasably axially secured by a fastening means releasably connecting the circular member to the hub in an axially tractive relationship. That axial traction causes axial compression of an annular sealing gasket fitted between the bell member and the hub-bearing unit. As a result, continuous sealing action is provided around the engaging splines of the bell member and the driving ring fixed to the hub.

A conventional straight splined coupling has a drawback due to the high noise that can be heard when the car is put into reverse, owing to the circumferential play between the splines on the bell of the constant velocity joint and the driving ring fixed on the hub.

It is a further object of the invention to overcome the above mentioned drawback concerning the noise. This other object is achieved, according to an aspect of the invention, by a coupling as defined in claim 6 or 7. The splined coupling is modified so that one of the two coupling members, i.e. the joint bell or the driving ring, has involute splines whereas the other member has straight axial splines. Owing to the engagement of the different splines the relative angular or circumferential play between the constant velocity joint and the hub is taken up.

A few preferred, but not limiting embodiments of the invention will now be described, reference being made to the accompanying drawings, in which:
- figure 1: is a partial axial cross sectional view of a first embodiment of an assembly comprising a constant velocity joint coupled to a hub-bearing unit;
- figure 2: schematically depicts the layout of the splines of two members of the assembly of figure 1 coupled together in accordance with the invention; and
- figure 3: is a view, similar to figure 1, of a second embodiment of the invention.

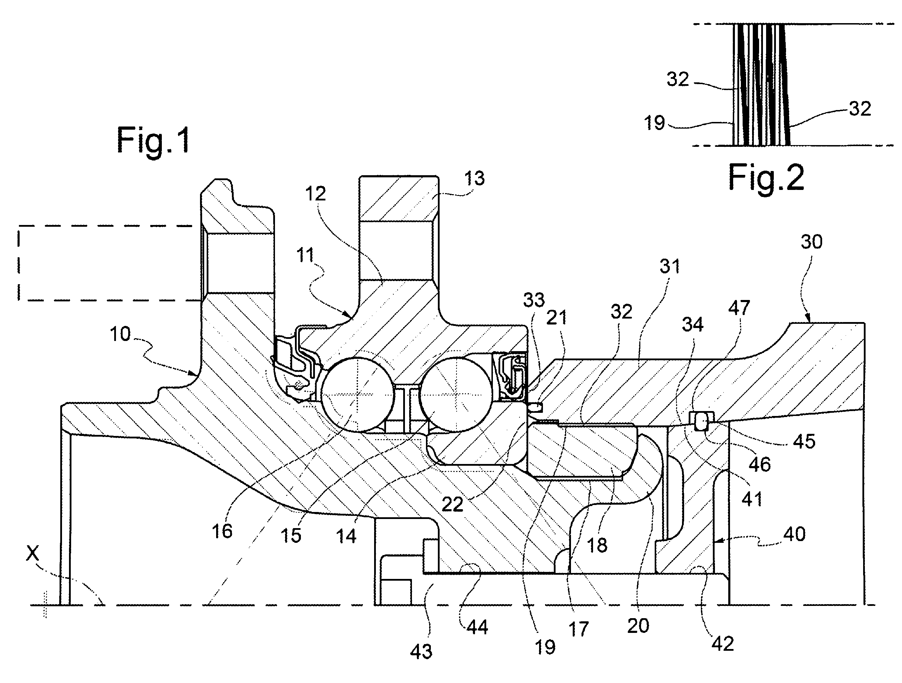

With reference initially to figure 1, a hub 10 for a driving wheel of a motor vehicle is rotatably mounted in the suspension standard (not shown) of the vehicle through a bearing unit 11 which includes an outer stationary ring 12 having a flange 13 fixed to the standard through bolts (not shown). Locked onto the hub 10 is a rotatable inner bearing ring 14 that forms the inner raceway for one of the two sets of balls 15, 16 of the bearing unit.

The hub has a cylindrical surface 17 towards its axially outer end, onto which there is fixed a driving ring 18 with outer axial splines or teeth 19 for transferring the driving torque from the bell 30 of the constant velocity joint to the hub. As used herein, terms such as circumferential, radial, or axial are to be construed with respect to the central axis of rotation x of the hub.

The driving ring 18 is securely axially locked against the inner bearing ring 14 by cold forming, preferably by orbital rolling, of an end edge 20 of the hub. At its axially outer side, the joint bell 30 forms a tubular projection 31 in which the driving ring 18 is telescopically fitted. Formed within the tubular projection 31 are inner axial splines 32 which couple with the outer splines 19 of the driving ring 18.

The two engaging splines are of different types. Whereas the outer splines 19 of the driving ring are axially straight, the inner ones 32 of the joint bell are involute, or vice versa. The helical pitch of the involute splines is long enough to allow an initial effortless insertion of the driving ring 18 into the joint bell, preferably with a slight angular play between these two members. As the insertion proceeds, the flanks of the straight axial splines and the involute splines come into contact, taking up the angular play between the hub and the joint bell. Preferably, the helical pitch of the involute splines is chosen so as to require some degree of axial force to reach the fully coupled condition shown in the drawing. This condition is schematically shown in figure 2, where each involute spline (black) contacts, at a first end thereof, one of the two successive straight axial splines between which it is inserted and, at its second end, it touches the other axial spline.

As clearly shown in figure 1, the outermost diameter of the driving ring 18 is smaller than the maximum diameter of the inner bearing ring 14. An elastic sealing ring 21 is axially compressed between two radial surfaces facing one another, namely the axially outer face 33 of the bell 30 and the facing axially inner face 22 of the bearing ring 14.

The hub and the constant velocity joint are axially removably joined by a rigid circular member 40 which is received in the cavity of the joint bell and closes it towards the outside. The circular member 40 provides a rigid, conical peripheral edge 41 which tapers in an axially outward direction. The conical edge 41 axially abuts against a correspondingly shaped conical surface 34 formed within the cavity of the bell. The circular member 40 provides a central threaded bore 42 in which there is screwed a fastening element 43, for example a screw, fitted through a bore 44 that runs centrally through the hub and that can be tightened from the outside. Tightening the screw 43 brings the hub closer to the joint and causes axial compression of the sealing ring 21, thereby assuring a particularly efficient sealing action at the interface between the hub and the constant velocity joint.

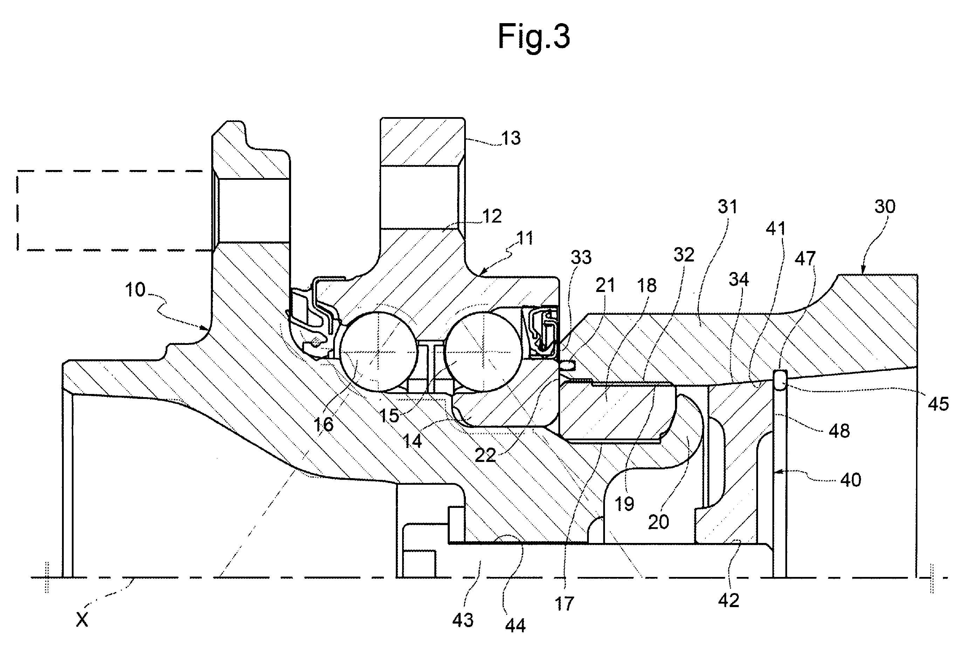

Preferably, a circlip or snap ring (or Seeger ring) 45 is provided at the interface between the rigid circular member 40 and the bell member 30 in order to keep the circular member 40 in position upon loosening the screw 43 for servicing the vehicle, since the unscrewing action will tend to push the circular member 40 backwards (or axially inwardly). In the embodiment of figure 1, the circlip 45 is partly accommodated in an annular groove 46 formed in the conical edge 41 of the circular member 40 and protrudes radially outwardly of the conical edge 41 so as to engage another annular groove 47 obtained in the conical surface 34 of the bell cavity. In the embodiment of figure 3, the circlip 45 is partly accommodated in an annular groove 47 obtained in the conical surface 34 of the bell cavity and protrudes radially inwardly beyond the surface 34 so as to provide a stop engaging the axially inner face 48 of the circular member 40. With the arrangement of figure 3, the snap ring 45 is particularly easy to remove without needing to force it.

As will be appreciated, the axial locking by means of the inner cap avoids the conventional circlip and the relevant slot in the bell for accessing the end gripping arms of the circlip. Hermetic seal is ensured continuously around the splined coupling due to the sealing ring compressed between the bell joint and the bearing unit. This arrangement, that provides for a sealing member being compressed and, to some extent, protected by two facing surfaces, is also more reliable in time with respect to the seal provided by a rubber sleeve of known kind, relatively thin and more delicate and subject to deterioration. It will also be appreciated that the absence of angular play between the hub and the joint bell eliminates the noise that is heard when the car is put into reverse with a splined coupling of conventional design.

Variations and modifications of the foregoing are within the scope of the claims. Those skilled in the art will readily recognize that the invention can be equally implemented if the involute splines are formed on the driving ring and the straight ones on the joint bell. Likewise, the shape of the rigid circular member 40 may depart from a disc. It may, for example, be shaped as a rounded cap. Similarly, the fastening means 43 may be a fastening pin with snap engaging portions instead of a screw.

## Claims

1. A coupling arrangement between a hub bearing unit for a motor vehicle wheel and an associated constant velocity joint, the hub bearing unit including a rotatable hub (10) to which a driving ring (18) is fixed for providing torque transmission to the hub from an outer, rotatable bell member (30) of the constant velocity joint,
the bell member (30) having a tubular projection (31) in which the driving ring (18) is telescopically fitted, the tubular projection (31) having a first end surface (33) facing a second surface (22) of a rotatable member (14) of the hub bearing unit,
the driving ring (18) having outer splines (19) engaging inner splines (32) of the tubular projection (31), **characterised in that** the hub and the constant velocity joint are releasably axially secured by
a rigid circular member (40) received in the cavity of the bell member and providing a rigid, conical peripheral edge (41) tapering in an axially outward direction and axially abutting against a correspondingly shaped conical surface (34) formed within the bell member (30), and
a fastening means (43) releasably connecting the rigid circular member to the hub (10) in an axially tractive relationship,
and that an annular sealing member (21) is fitted between said first (33) and second (22) surfaces, whereby said axial traction causes axial compression of the annular sealing member (21) which provides continuous sealing action around the engaging splines (19, 32).

2. A coupling arrangement according to claim 1, **characterised in that** the fastening means (43) include a threaded member screwed in a central threaded bore (42) of the rigid circular member (40) and fitted through an axial bore (44) running centrally through the hub (10) and that can be tightened from the outside.

3. A coupling arrangement according to claim 1, **characterised in that** the rigid circular member (40) closes the internal cavity of the bell member (30) towards the outside.

4. A coupling arrangement according to claim 1, further comprising a snap ring (45) partly accommodated in an annular groove (46) formed in the conical edge (41) of the circular member (40) and protruding radially outwardly of that conical edge so as to engage another annular groove (47) obtained in the conical surface (34) of the bell member (30).

5. A coupling arrangement according to claim 1, further comprising a snap ring (45) partly accommodated in an annular groove (47) obtained in the conical surface (34) of the bell cavity and protruding radially inwardly beyond this conical surface so as to provide a stop engaging an axially inner side (48) of the circular member (40).

6. A coupling arrangement according to any one of the preceding claims, **characterised in that** the splines (19) of the driving ring (18) are axially straight splines, and the splines (32) of the tubular projection (31) are involute splines.

7. A coupling arrangement according to any one of claims 1 to 5, **characterised in that** that the splines (32) of the tubular projection (31) are axially straight splines, and the splines (19) of the driving ring (18) are involute splines.

8. A coupling arrangement according to any one of the preceding claims, **characterised in that** that the outermost diameter of the driving ring (18) is smaller than the maximum diameter of the inner bearing ring (14) providing said second surface (22).

9. A coupling arrangement according to any one of the preceding claims, **characterised in that** that said first (33) and second (22) surfaces are radial surfaces facing one another.

## Patentansprüche

1. Verbindungsanordnung zwischen einer Nabenlagereinheit für ein Kraftfahrzeugrad und einem zugehörigen Gleichlaufgelenk, wobei die Nabenlagereinheit eine drehbare Nabe (10) aufweist, an welcher ein Antriebsring (18) zum Bereitstellen von Drehmomentübertragung auf die Nabe von einem äußeren, drehbaren Glockenelement (30) des Gleichlaufgelenks fixiert ist,
das Glockenelement (30) einen rohrförmigen Vorsprung (31) aufweist, in welchem der Antriebsring (18) teleskopisch eingepasst ist, wobei der rohrförmige Vorsprung (31) eine erste Endfläche (33) gegenüber einer zweiten Fläche (22) eines drehbaren Elements (14) der Nabenlagereinheit aufweist,
der Antriebsring (18) äußere Keilverzahnungen (19) aufweist, die in innere Keilverzahnungen (32) des rohrförmigen Vorsprungs (31) eingreifen,
**dadurch gekennzeichnet, dass** die Nabe und das Gleichlaufgelenk axial lösbar befestigt sind durch
ein starres kreisförmiges Element (40), das im Hohlraum des Glockenelements aufgenommen ist und eine starre, konische Umfangskante (41) bereitstellt, die in einer axial nach außen gerichteten Richtung konisch zuläuft und axial gegen eine entsprechend geformte konische Fläche (34) stößt, die innerhalb des Glockenelements (30) ausgebildet ist, und
ein Befestigungsmittel (43), welches das starre kreisförmige Element in einer axial ziehenden Beziehung lösbar mit der Nabe (10) verbindet,
und dass ein ringförmiges Dichtungselement (21) zwischen die ersten (33) und zweiten (22) Flächen eingepasst ist, wobei der axiale Zug eine axiale Kompression des ringförmigen Dichtungselements (21) bewirkt, welches eine kontinuierliche Dichtwirkung um die in Eingriff stehenden Keilverzahnungen (19, 32) bereitstellt.

2. Verbindungsanordnung nach Anspruch 1, **dadurch gekennzeichnet, dass** die Befestigungsmittel (43) ein Gewindeelement aufweisen, das in eine mittige Gewindebohrung (42) des starren kreisförmigen Elements (40) geschraubt und durch eine mittig durch die Nabe (10) verlaufende, axiale Bohrung (44) eingepasst ist und das von außen festgezogen werden kann.

3. Verbindungsanordnung nach Anspruch 1, **dadurch gekennzeichnet, dass** das starre kreisförmige Element (40) den inneren Hohlraum des Glockenelements (30) zur Außenseite schließt.

4. Verbindungsanordnung nach Anspruch 1, ferner aufweisend einen Schnappring (45), der teilweise in einer ringförmigen Nut (46) untergebracht ist, die in der konischen Kante (41) des kreisförmigen Elements (40) ausgebildet ist, und von dieser konischen Kante radial nach außen vorsteht, um in eine andere ringförmige Nut (47) einzugreifen, die in der konischen Fläche (34) des Glockenelements (30) erwirkt ist.

5. Verbindungsanordnung nach Anspruch 1, ferner aufweisend einen Schnappring (45), der teilweise in einer ringförmigen Nut (47) untergebracht ist, die in der konischen Fläche (34) des Glockenhohlraums erwirkt ist und über diese konische Fläche hinaus radial nach innen vorsteht, um einen Anschlag bereitzustellen, der in eine axial innere Seite (48) des kreisförmigen Elements (40) eingreift.

6. Verbindungsanordnung nach einem der vorhergehenden Ansprüche, **dadurch gekennzeichnet, dass** die Keilverzahnungen (19) des Antriebsrings (18) axial gerade Keilverzahnungen sind und die Keilverzahnungen (32) des rohrförmigen Vorsprungs (31) Evolventenkeilverzahnungen sind.

7. Verbindungsanordnung nach einem der Ansprüche 1 bis 5, **dadurch gekennzeichnet, dass** die Keilverzahnungen (32) des rohrförmigen Vorsprungs (31) axial gerade Keilverzahnungen sind und die Keilverzahnungen (19) des Antriebsrings (18) Evolventenkeilverzahnungen sind.

8. Verbindungsanordnung nach einem der vorhergehenden Ansprüche, **dadurch gekennzeichnet, dass** der äußerste Durchmesser des Antriebsrings (18) kleiner als der maximale Durchmesser des inneren Lagerrings (14) ist, der die zweite Fläche (22) bereitstellt.

9. Verbindungsanordnung nach einem der vorhergehenden Ansprüche, **dadurch gekennzeichnet, dass** die ersten (33) und zweiten (22) Flächen radiale Flächen sind, die einander gegenüberliegen.

## Revendications

1. Agencement d'accouplement entre une unité de palier de moyeu pour une roue de véhicule automobile et un joint homocinétique associé, l'unité de palier de moyeu comportant un moyeu rotatif (10) auquel est fixée une bague d'entraînement (18) pour assurer une transmission de couple au moyeu depuis un organe de cloche (30) rotatif externe du joint homocinétique,
l'organe de cloche (30) ayant une saillie tubulaire (31) dans laquelle la bague d'entraînement (18) est montée de manière télescopique, la saillie tubulaire (31) ayant une première surface d'extrémité (33) en regard d'une deuxième surface (22) d'un organe rotatif (14) de l'unité de palier de moyeu,
la bague d'entraînement (18) ayant des cannelures externes (19) s'engageant avec des cannelures internes (32) de la saillie tubulaire (31), **caractérisé en ce que** le moyeu et le joint homocinétique sont fixés axialement de manière amovible par
un organe circulaire rigide (40) reçu dans la cavité de l'organe de cloche et produisant un bord périphérique conique rigide (41) s'amincissant dans une direction axialement vers l'extérieur et venant en butée axialement contre une surface conique de forme correspondante (34) formée à l'intérieur de l'organe de cloche (30), et
un moyen de fixation (43) reliant de manière amovible l'organe circulaire rigide au moyeu (10) dans une relation de traction axiale,
et **en ce qu'**un organe d'étanchéité annulaire (21) est ajusté entre lesdites première (33) et deuxième (22) surfaces, ladite traction axiale provoquant une compression axiale de l'organe d'étanchéité annulaire (21) qui assure une action d'étanchéité continue autour des cannelures d'engagement (19, 32).

2. Agencement d'accouplement selon la revendication 1, **caractérisé en ce que** le moyen de fixation (43) comporte un organe fileté vissé dans un alésage fileté central (42) de l'organe circulaire rigide (40) et ajusté à travers un alésage axial (44) s'étendant centralement à travers le moyeu (10) et qui peut être serré depuis l'extérieur.

3. Agencement d'accouplement selon la revendication 1, **caractérisé en ce que** l'organe circulaire rigide (40) ferme la cavité interne de l'organe de cloche (30) en direction de l'extérieur.

4. Agencement d'accouplement selon la revendication 1, comportant en outre une bague élastique (45) reçue partiellement dans une rainure annulaire (46) formée dans le bord conique (41) de l'organe circulaire (40) et faisant saillie radialement à l'extérieur de ce bord conique de manière à s'engager avec une autre rainure annulaire (47) obtenue dans la surface conique (34) de l'organe de cloche (30).

5. Agencement d'accouplement selon la revendication 1, comportant en outre une bague élastique (45) reçue partiellement dans une rainure annulaire (47) obtenue dans la surface conique (34) de la cavité de cloche et faisant saillie radialement à l'intérieur au-delà de cette surface conique de manière à produire une butée s'engageant avec un côté axialement interne (48) de l'organe circulaire (40).

6. Agencement d'accouplement selon l'une quelconque des revendications précédentes, **caractérisé en ce que** les cannelures (19) de la bague d'entraînement (18) sont des cannelures axialement rectilignes, et les cannelures (32) de la saillie tubulaire (31) sont des cannelures en développante.

7. Agencement d'accouplement selon l'une quelconque des revendications 1 à 5, **caractérisé en ce que** les cannelures (32) de la saillie tubulaire (31) sont des cannelures axialement rectilignes, et les cannelures (19) de la bague d'entraînement (18) sont des cannelures en développante.

8. Agencement d'accouplement selon l'une quelconque des revendications précédentes, **caractérisé en ce que** le diamètre le plus extérieur de la bague d'entraînement (18) est inférieur au diamètre maximal de la bague de palier interne (14) produisant ladite deuxième surface (22).

9. Agencement d'accouplement selon l'une quelconque des revendications précédentes, **caractérisé en ce que** lesdites première (33) et deuxième (22) surfaces sont des surfaces radiales en regard l'une de l'autre.
